# EUROPÄISCHE PATENTANMELDUNG

(11) **EP 4 563 403 A2**
(43) Veröffentlichungstag der Anmeldung: **04.06.2025**
(21) Anmeldenummer: 24211627.5
(22) Anmeldetag: 08.11.2024
(51) Int. Cl.: B60L 53/10, B60L 53/30

(54) **SCHNELLLADESTATION FÜR ELEKTROFAHRZEUGE**

(30) Priorität: 08.11.2023 DE 102023130955
(71) Anmelder: Compleo Charging Solutions GmbH & Co. KG, 58513 Lüdenscheid (DE)
(72) Erfinder: PALOJA, Imer, 58285 Gevelsberg (DE); REISING, Viktor, 58706 Menden (DE); WOHLFAHRT, Thomas, 45721 Haltern am See (DE); GARMABAD, Mahyar, 45149 Essen (DE)
(74) Vertreter: Gottschald Patentanwälte Partnerschaft mbB

(57) **Zusammenfassung**

Die Erfindung betrifft eine Schnellladestation für Elektrofahrzeuge (2), wobei die Schnellladestation (1) mehrere Leistungsmodule (4) aufweist, wobei die Leistungsmodule (4) jeweils eine Stromrichteranordnung (5) insbesondere zur Wandlung einer Wechselspannung als Eingangsspannung der Schnellladestation (1) in eine Gleichspannung als Ausgangsspannung der Schnellladestation (1) aufweisen, wobei die Leistungsmodule (4) Ausgangsanschlüsse (6) aufweisen, an denen das Leistungsmodul (4) elektrische Leistung mit geregelten Ausgangsparametern abgibt, wobei die Ausgangsanschlüsse (6) von mindestens zwei Leistungsmodulen (4) zur Abgabe elektrischer Leistung an mindestens einem Anschlusspunkt (3) der Schnellladestation (1) zu einer ersten Gruppe (7) zusammen, insbesondere parallel, geschaltet werden. Es wird vorgeschlagen, dass die Schnellladestation (1) einen Gesamtsensor (9) für den der ersten Gruppe (7) zugeordneten Anschlusspunkt (3) aufweist, der einen Ausgangsparameter des Anschlusspunkts (3) misst und als Sensorsignal ausgibt, dass das Sensorsignal an ein Primärmodul (10) der ersten Gruppe (7) übertragen wird, dass das Primärmodul (10) einen Modulsensor (11) für den gleichen Ausgangsparameter aufweist, der den Ausgangsparameter als Ausgangsparameter des Leistungsmoduls (4) misst, und, dass das Primärmodul (10) das Sensorsignal zur Regelung eines seiner Ausgangsparameter verwendet.

## Beschreibung

Die vorliegende Erfindung betrifft eine Schnellladestation für Elektrofahrzeuge gemäß dem Oberbegriff von Anspruch 1, ein Verfahren zur Steuerung einer Schnellladestation gemäß dem Oberbegriff von Anspruch 13 sowie ein Leistungsmodul eingerichtet zur Verwendung in einer Schnellladestation gemäß Anspruch 14.

Schnellladestationen, auch bekannt als high performance charger, sind Gleichstromladestationen für elektrische Fahrzeuge, insbesondere Automobile, aber auch Lastkraftfahrzeuge, Schiffe und dergleichen.

Es sind Schnellladestationen bekannt, beispielsweise der Hypercharger von Alpitronic, die mehrere Leistungsmodule aufweisen. Leistungsmodule weisen jeweils eine Stromrichteranordnung auf, die hier eine Wechselspannung am Eingang in eine Gleichspannung am Ausgang umwandelt. Statt einer Stromrichteranordnung für die gesamte Schnellladestation werden also mehrere verwendet. Das ermöglicht zum Beispiel eine flexible Verteilung der Leistungsmodule auf Anschlusspunkte, kleinere und ggf. effizientere Leistungselektronik und dergleichen.

Bei Schnellladestationen mit Leistungsmodulen ist denkbar, die Leistungsmodule parallel oder in Reihe zu schalten, oder komplexere Misch-Verschaltungen zu wählen. Bei der Entscheidung für die Verschaltung handelt es sich um eine grundsätzliche Entscheidung, da die sich daraus ergebenden Herausforderungen für die Regelung der Leistungsmodule naturgemäß sehr unterschiedlich sind. Bei einer bekannten Schnellladestation weisen die Leistungsmodule Ausgangsanschlüsse auf, an denen das Leistungsmodul elektrische Leistung mit geregelten Ausgangsparametern abgibt, wobei die Ausgangsanschlüsse von mindestens zwei Leistungsmodulen zur Abgabe elektrischer Leistung an mindestens einem Anschlusspunkt der Schnellladestation zu einer ersten Gruppe parallel geschaltet werden.

Insgesamt ist es notwendig, sicherzustellen, dass die Regelung der Schnellladestation eine ausreichend hohe Genauigkeit hat. Der einfachste Weg, dieses Ziel zu erreichen, wäre, jedes Leistungsmodul mit einer sehr genauen Regelung zu versehen und gegebenenfalls noch eine übergeordnete genaue Regelung vorzusehen. Das wäre jedoch auch ein sehr teurer Weg, dieses Ziel zu erreichen. Herausfordernd ist, dass mehrere Leistungsmodule vorhanden sind, eigentlich jedoch der Gesamtausgang am Anschlusspunkt relevant ist.

Es ist dabei eine Herausforderung, ein kostengünstiges Konzept anzugeben, mit dem eine Regelung der Ausgangsparameter des Anschlusspunktes möglich ist, obwohl Leistungsmodule die Leistung stellen.

Der Erfindung liegt das Problem zugrunde, die bekannten Schnellladestationen derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass eine genaue Sensorik am Anschlusspunkt angeordnet werden kann und soll, dass deren Sensorsignale jedoch an ein Leistungsmodul weitergeleitet werden können, das diese Sensorsignale verwendet und so die notwendige Genauigkeit am Anschlusspunkt sicherstellt.

Im Einzelnen wird vorgeschlagen, dass die Schnellladestation einen Gesamtsensor für den der ersten Gruppe zugeordneten Anschlusspunkt aufweist, der einen Ausgangsparameter des Anschlusspunkts misst und als Sensorsignal ausgibt, dass das Sensorsignal an ein Primärmodul der ersten Gruppe übertragen wird, dass das Primärmodul einen Modulsensor für den gleichen Ausgangsparameter aufweist, der den Ausgangsparameter als Ausgangsparameter des Leistungsmoduls misst, und, dass das Primärmodul das Sensorsignal zur Regelung eines seiner Ausgangsparameter verwendet.

Bei einer bevorzugten Ausgestaltung gemäß Anspruch 2 handelt es sich bei dem Gesamtsensor um einen Gesamtstromsensor. Außerdem betrifft Anspruch 2 Ausgestaltungen, wonach der Gesamtsensor deutlich genauer ist, als der Modulsensor. Dabei handelt es sich um sehr effiziente und kostengünstige Ausgestaltungen. Die Leistungsmodule können mit internen, weniger genauen und damit günstigeren, Sensoren schnell und effektiv eine Regelung umsetzen und der Gesamtsensor kann für die Feinjustage genutzt werden, um sicherzustellen, dass die notwendige Genauigkeit am Anschlusspunkt erreicht wird.

Gemäß Anspruch 3 kann vorgesehen sein, dass der Gesamtsensor an eine Leistungssteuereinheit angeschlossen ist, die die Leistungsmodule mit Regelvorgaben versorgt. Die Anbindung des Gesamtsensors an das Primärmodul kann daher deutlich langsamer sein, als die Anbindung des Modulsensors. Das ist jedoch hinnehmbar, da die Ausgangsparameter bei einem Ladevorgang die meiste Zeit keine so hohe Dynamik aufweisen, dass die Feinjustage nicht auch langsamer sein könnte und Dynamikspitzen, so sie denn auftreten, auch über den Modulsensor erstmal grob ausgeregelt werden können, bis der Ladevorgang sich eingeschwungen hat und dann über den Gesamtsensor wieder feinjustiert wird.

Außerdem kann vorgesehen sein, dass das Primärmodul nicht dauerhaft das gleiche Modul ist (Anspruch 4). Über die Leistungssteuereinheit kann das Sensorsignal des Gesamtsensors unproblematisch immer an das Primärmodul weitergeleitet werden, egal, welches Leistungsmodul gerade das Primärmodul ist.

Besonders interessant ist auch eine Ausgestaltung gemäß Anspruch 5, wonach ein Stromsensor eines Energiezählers, der regelmäßig nicht schnell anbindbar aber sowieso vorhanden ist, als Gesamtsensor genutzt wird oder die Sensorsignale des Gesamtsensors und eines Zählersensors verglichen werden, um den Gesamtsensor zu kalibrieren oder die gegenseitige Funktionstüchtigkeit zu überprüfen, beispielsweise um einen Eichzeitraum durch einen Funktionsnachweis zu verlängern.

Die Ansprüche 6 bis 9 betreffen bevorzugte Details der Regelungskonzepte, wobei neben dem Primärmodul mindestens ein Sekundärmodul vorhanden ist. Dem Primärmodul wird demnach die Aufgabe zuteil, mindestens eine Gesamtregelung für einen elektrischen Parameter, zumeist Spannung, Strom oder Leistung, des Anschlusspunktes zu übernehmen, während die Sekundärmodule ihre eigenen Parameter regeln.

Ändert sich die Leistungsanforderung eines Elektrofahrzeugs abrupt, beispielsweise weil ein Verbraucher wie eine Heizung eingeschaltet wird, übernimmt das Primärmodul die erste Reaktion und stellt sicher, dass die elektrischen Parameter am Anschlusspunkt an die neue Leistungsanforderung angepasst werden.

Eine eventuell vorhandene Leistungssteuereinheit kann somit mit weniger Rechenkapazität und einer langsameren Kommunikationsanbindung angeschlossen werden, da sie in die erste Reaktion nicht eingebunden ist. Auch eine Kommunikation zwischen den Leistungsmodulen, sofern überhaupt vorhanden, muss nicht schnell genug sein, um auf schlagartige Änderungen am Anschlusspunkt zu reagieren.

Bei einer besonders bevorzugten Ausgestaltung gemäß Anspruch 7 regelt das Primärmodul die Gesamtspannung, indem es seine eigene Ausgangsspannung regelt und/oder das Sekundärmodul regelt seinen Ausgangsstrom. Änderungen am Anschlusspunkt werden so auf einfache Art und Weise nur von dem Primärmodul ausgeregelt, während im ersten Moment die Sekundärmodule schlicht weiter ihren Strom stellen.

Anspruch 8 betrifft bevorzugte Ausgestaltungen des Leistungsmoduls als Einheit mit ihrem Regelungsmodul. Ist das Regelungsmodul nicht abgesetzt vom Rest des Leistungsmoduls ist ein Austausch des gesamten Leistungsmoduls einfach möglich und Verzögerungen durch Kommunikationsstrecken für Messwerte und Stellgrößen sind sehr gering.

Bei einer Ausgestaltung gemäß Anspruch 9 erstellt die Leistungssteuereinheit die Regelungsvorgaben so, dass das Primärmodul eine hohe Regelreserve für abrupte Änderungen am Anschlusspunkt aufweist.

Anspruch 10 betrifft eine Ausgestaltung bei der die Leistungssteuereinheit über einen Bus, insbesondere CAN-Bus, mit den Leistungsmodulen verbunden ist. Die Kommunikation läuft dabei vorzugsweise langsamer ab als für eine Regelung durch die Leistungssteuereinheit notwendig wäre.

Ebenfalls kann durch die Leistungssteuereinheit bei der Zuordnung der Leistungsmodule zu dem Anschlusspunkt eine Alterungsmetrik berücksichtigt werden, sodass zum Beispiel ein älteres Leistungsmodul weniger belastet wird (Anspruch 11).

Eine besonders bevorzugte Ausgestaltung gemäß Anspruch 12 betrifft die Möglichkeit, das Primärmodul frei aus den Leistungsmodulen auszuwählen, wodurch die Schnellladestation selbst bei Ausfall eines Leistungsmoduls weiter benutzt werden kann.

Nach einer weiteren Lehre gemäß Anspruch 13, der eigenständige Bedeutung zukommt, wird ein Verfahren zur Steuerung einer Schnellladestation beansprucht.

Dabei ist wesentlich, dass die Schnellladestation einen Gesamtsensor für den der ersten Gruppe zugeordneten Anschlusspunkt aufweist, der einen Ausgangsparameter des Anschlusspunkts misst und als Sensorsignal ausgibt, dass das Sensorsignal an ein Primärmodul der ersten Gruppe übertragen wird, dass das Primärmodul einen Modulsensor für den gleichen Ausgangsparameter aufweist, der den Ausgangsparameter als Ausgangsparameter des Leistungsmoduls misst, und, dass das Primärmodul das Sensorsignal zur Regelung eines seiner Ausgangsparameter verwendet.

Auf alle Ausführungen zu der vorschlagsgemäßen Schnellladestation darf verwiesen werden.

Nach einer weiteren Lehre gemäß Anspruch 14, der ebenfalls eigenständige Bedeutung zukommt, wird ein Leistungsmodul eingerichtet zur Verwendung in einer vorschlagsgemäßen Schnellladestation beansprucht.

Auf alle Ausführungen zu der vorschlagsgemäßen Schnellladestation und dem vorschlagsgemäßen Verfahren darf verwiesen werden.

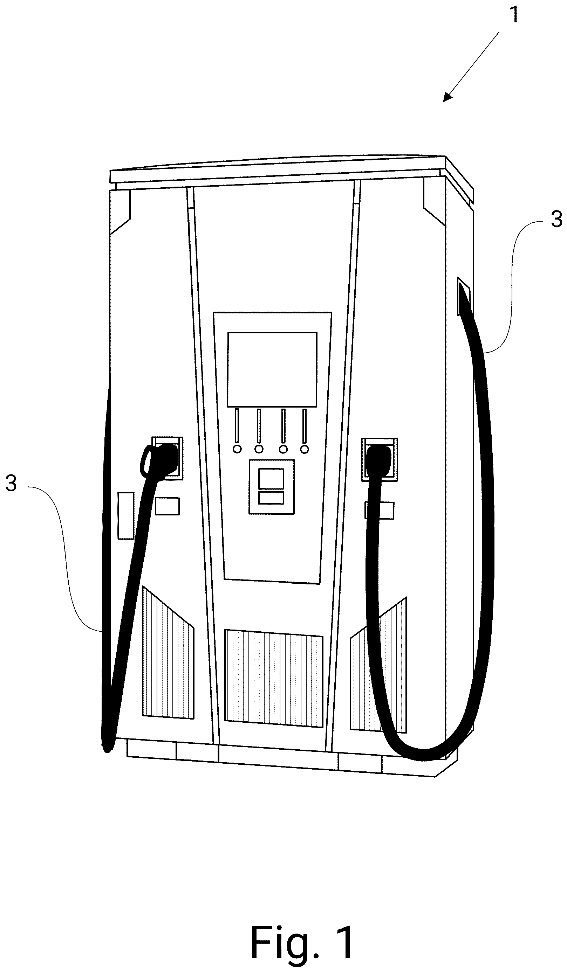

Im Folgenden wird die Erfindung anhand einer lediglich Ausführungsbeispiele darstellenden Zeichnung näher erläutert. In der Zeichnung zeigt
- .Fig. 1: eine vorschlagsgemäße Schnellladestation,
- Fig. 2: Leistungsmodule in der Schnellladestation,
- Fig. 3: schematisch die Abgabe elektrischer Leistung durch mehrere Leistungsmodule,
- Fig. 4: eine bevorzugte Ausgestaltung der Regelungen der verschiedenen Leistungsmodule und die Einbindung der Leistungssteuereinheit und
- Fig. 5: exemplarische Strom- und Spannungskurven eines Ladevorgangs.

Fig. 1 zeigt eine Außenansicht einer vorschlagsgemäßen Schnellladestation 1 für Elektrofahrzeuge 2. Diese weist mindestens einen Anschlusspunkt 3 für ein Elektrofahrzeug 2, hier ein fest angeschlagenes Ladekabel, auf. Vorzugsweise weist die Schnellladestation 1 mindestens, hier genau, zwei Anschlusspunkte 3 auf. Eine Schnellladestation 1 dient zum Laden eines Elektrofahrzeugs 2 mittels Gleichstroms und einer Leistung von zumeist mindestens 50 kW. Üblicherweise ist die Schnellladestation 1 dafür an ein Wechselstromnetz angeschlossen.

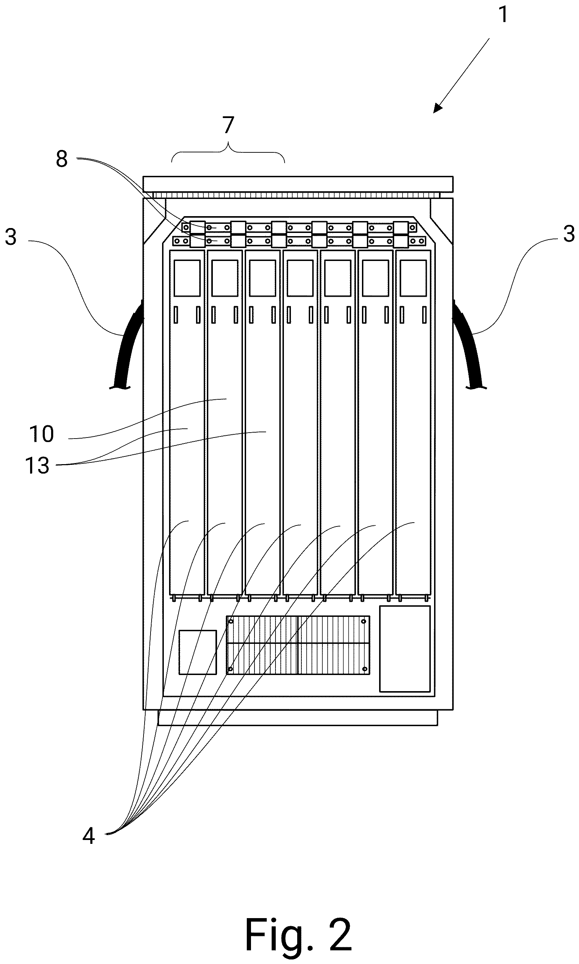

Wie in der geöffneten Ansicht in Fig. 2 erkennbar ist, weist die Schnellladestation 1 mindestens ein einzeln handhabbares Leistungsmodul 4 auf. Hier weist die Schnellladestation 1 sieben Leistungsmodule 4 auf, die jeweils einen Teil der Gesamtleistung der Schnellladestation 1 zur Verfügung stellen, hier beispielsweise jeweils 30 kW. Die Leistungsmodule 4 können hier und vorzugsweise flexibel auf die Anschlusspunkte 3 aufgeteilt werden.

Der Begriff "einzeln handhabbar" ist hier breit zu verstehen. Das Leistungsmodul 4 wiegt hier beispielsweise etwa 39 kg, ist also nicht leicht handhabbar. Es ist jedoch einzeln herausnehmbar und die Komponenten des Leistungsmoduls 4 sind gerade nicht einzeln in der Schnellladestation 1 verbaut.

Das in den Figuren dargestellte und insoweit bevorzugte Ausführungsbeispiel betrifft eine Schnellladestation 1 für Elektrofahrzeuge 2, wobei die Schnellladestation 1 mehrere Leistungsmodule 4 aufweist, wobei die Leistungsmodule 4 jeweils eine Stromrichteranordnung 5 insbesondere zur Wandlung einer Wechselspannung als Eingangsspannung der Schnellladestation 1 in eine Gleichspannung als Ausgangsspannung der Schnellladestation 1 aufweisen. Denkbar ist auch, dass ein AC/DC Wandler für alle Leistungsmodule 4 und getrennte DC/DC Wandler im Leistungsmodul 4 vorgesehen sind. Die Leistungsmodule 4 weisen Ausgangsanschlüsse 6 auf, an denen das Leistungsmodul 4 elektrische Leistung mit geregelten Ausgangsparametern abgibt. Die geregelten Ausgangsparameter können insbesondere die Spannung und/oder den Strom umfassen.

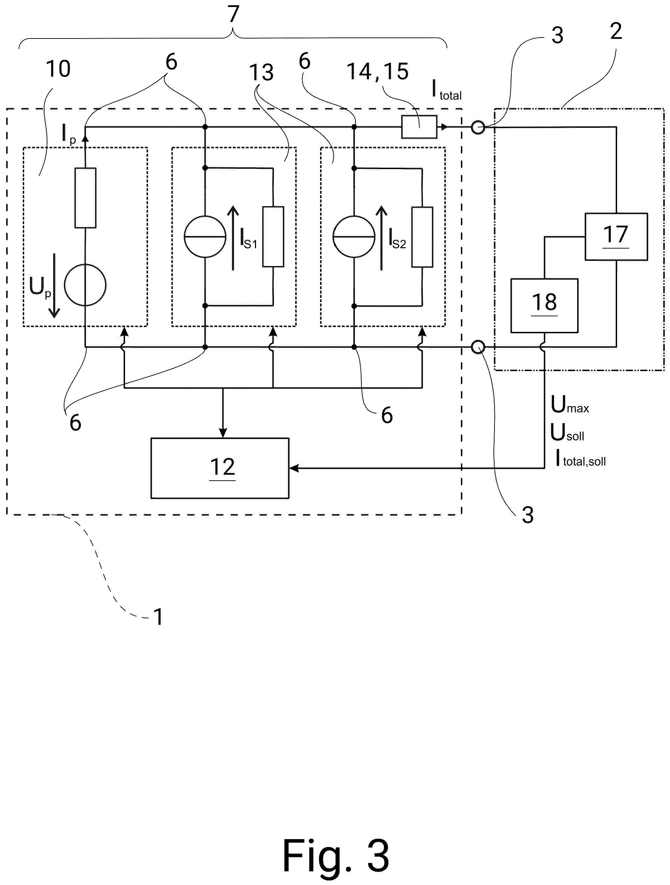

Die Ausgangsanschlüsse 6 von mindestens zwei Leistungsmodulen 4 werden zur Abgabe elektrischer Leistung an mindestens einem Anschlusspunkt 3 der Schnellladestation 1 zu einer ersten Gruppe 7 zusammen, insbesondere parallel, geschaltet. Fig. 3 zeigt diese Parallelschaltung schematisch für drei Leistungsmodule 4. In manchen Konstellationen, insbesondere bei manchen Ladevorgängen oder zum Ende eines Ladevorgangs kann der Fall eintreten, dass nur ein Leistungsmodul 4 Leistung an einen Anschlusspunkt 3 abgibt. Dieser Fall ist mit der vorschlagsgemäßen Schnellladestation 1 möglich, im Folgenden wird jedoch die Regelung der Leistungsmodule 4 betrachtet, wenn mindestens zwei Leistungsmodule 4 Leistung an den Anschlusspunkt 3 abgeben. Bei der Parallelschaltung addieren sich die Ströme der Leistungsmodule 4, während die Spannungen in der Regel annähernd gleich sein müssen.

Hier und vorzugsweise weist die Leistungselektronik einen Gleichrichter und einen nachgeschalteten Gleichspannungswandler auf, die nicht im Detail dargestellt sind. Erkennbar sind im oberen Bereich der Schnellladestation 1 Gleichspannungsschienen 8 zur Verteilung der Ausgangsleistung der Leistungsmodule 4 auf die Anschlusspunkte 3. Der Wechselspannungseingang ist hier im unteren Bereich angeordnet und nicht dargestellt.

Wesentlich ist nun, dass die Schnellladestation 1 einen Gesamtsensor 9 für den der ersten Gruppe 7 zugeordneten Anschlusspunkt 3 aufweist, der einen Ausgangsparameter des Anschlusspunkts 3 misst und als Sensorsignal ausgibt, dass das Sensorsignal an ein Primärmodul 10 der ersten Gruppe 7 übertragen wird, dass das Primärmodul 10 einen Modulsensor 11 für den gleichen Ausgangsparameter aufweist, der den Ausgangsparameter als Ausgangsparameter des Leistungsmoduls 4 misst, und, dass das Primärmodul 10 das Sensorsignal zur Regelung eines seiner Ausgangsparameter verwendet. Die Übertragung des Sensorsignals kann direkt oder indirekt, beispielsweise als Regelabweichung oder weitergehend ausgewertet, erfolgen.

Hier und vorzugsweise ist der Gesamtsensor 9 ein Gesamtstromsensor und der Modulsensor 11 ein Modulstromsensor. Zusätzlich oder alternativ weist der Gesamtsensor 9 eine maximale Abweichung bei der Messung des Ausgangsparameters im Betriebsbereich der Schnellladestation 1 auf, die höchstens 50 %, vorzugsweise höchstens 30 %, weiter vorzugsweise höchstens 10 %, der maximalen Abweichung im Betriebsbereich des Leistungsmoduls 4 des Modulsensors 11 beträgt. Kann der Betriebsbereich nicht ohne weiteres, insbesondere aus einem Datenblatt der Schnellladestation 1, bestimmt werden, wird der Betriebsbereich definiert als Bereich zwischen null Ampere und dem maximalen Strom bei maximaler Ausgangsspannung der Schnellladestation 1 bei 20° Celsius. Alternativ kann auch auf Datenblätter der Sensoren zurückgegriffen werden und davon ausgegangen werden, dass diese nur in ihrem spezifizierten Betriebsbereich verwendet werden.

Vorzugsweise ist vorgesehen, dass die Schnellladestation 1 eine Leistungssteuereinheit 12 aufweist, und, dass die Leistungssteuereinheit 12 Regelungsvorgaben für die Leistungsmodule 4 erstellt. Der Gesamtstromsensor kann mit der Leistungssteuereinheit 12 verbunden sein und die Leistungssteuereinheit 12 kann das Sensorsignal des Gesamtstromsensors, insbesondere direkt oder als Regelabweichung, an das Primärmodul 10 weitergeben.

Hier und vorzugsweise weist die erste Gruppe 7 ein Primärmodul 10 und mindestens ein Sekundärmodul 13 auf. Bevorzugt weist die erste Gruppe 7 immer genau ein Primärmodul 10 auf. Manchmal ist kein Sekundärmodul 13 nötig, für die betrachteten Fälle ist jedoch mindestens eines vorhanden. Bevorzugt ist es so, dass das Primärmodul 10 zwischen verschiedenen Leistungsmodulen 4 wechselt.

Weiter ist hier und vorzugsweise vorgesehen, dass die Schnellladestation 1 einen, insbesondere geeichten, Energiezähler 14 aufweist, der einen Zählerstromsensor 15 aufweist. Energiezähler 14 werden benötigt, um die abgegebene Leistungsmenge abrechnen zu können. Entsprechend ist hier und vorzugsweise ein Energiezähler 14 pro Anschlusspunkt 3 vorgesehen. Ein Energiezähler 14 weist einen Zählerstromsensor 15 auf, der jedoch aufgrund der eichrechtlich meist beschränkten und langsamen Anbindung herkömmlich nicht für die Regelung genutzt wird, obwohl die Genauigkeit ausreichend wäre. Es ist zusätzlich oder als Alternative zur Nutzung bei der Regelung denkbar, dass die Leistungssteuereinheit 12 ein Sensorsignal des Zählerstromsensors 15 mit dem Sensorsignal des Gesamtstromsensors vergleicht, insbesondere um eine Funktionstüchtigkeit des Zählerstromsensors 15 und/oder des Gesamtstromsensors zu ermitteln und/oder den Gesamtsensor 9 zu kalibrieren. Alternativ kann der Gesamtstromsensor der Zählerstromsensor 15 sein. Das ist möglich, da hier die Geschwindigkeit in der Anbindung nicht benötigt wird.

In einer Ausgestaltung ist vorgesehen, dass die erste Gruppe 7, insbesondere immer genau, ein Primärmodul 10 und mindestens ein Sekundärmodul 13 aufweist. Die Leistungsmodule 4 weisen jeweils ein Regelungsmodul 16 auf, das die Stromrichteranordnung 5 des jeweiligen Leistungsmoduls 4 regelt. Vorzugsweise ist es dabei so, dass das Regelungsmodul 16 des Primärmoduls 10 eine Gesamtregelung für den Anschlusspunkt 3 übernimmt, und, dass das Regelungsmodul 16 oder die Regelungsmodule 16 des Sekundärmoduls 13 oder der Sekundärmodule 13 mindestens einen ihrer Ausgangsparameter regeln. Die Regelung des Ausgangsparameters des Sekundärmoduls 13 oder der Sekundärmodule 13 erfolgt dabei hier und vorzugsweise so, dass dieser Ausgangsparameter kein Ausgangsparameter des Anschlusspunktes 3 ist. Besonders bevorzugt und in Fig. 3 dargestellt verhält es sich so, dass das Primärmodul 10 die Gesamtspannung des Anschlusspunkts 3 regelt, insbesondere indem es seine Ausgangsspannung regelt, und so als Spannungsquelle funktioniert, und/oder, dass das Sekundärmodul 13 seinen Ausgangsstrom regelt und so als Stromquelle funktioniert, oder, dass die Sekundärmodule 13 ihren Ausgangsstrom regeln und so als Stromquellen funktionieren. Das Primärmodul 10 regelt also seine Spannung, die bei einer Parallelschaltung im Wesentlichen der Spannung des Anschlusspunktes 3 entspricht. Die Sekundärmodule 13 regeln den Strom, der sich mit dem Strom der anderen Sekundärmodule 13 und des Primärmoduls 10 addiert und somit kein Ausgangsparameter des Anschlusspunktes 3 ist.

Hier und vorzugsweise weist die Schnellladestation 1 genau eine Leistungssteuereinheit 12 auf, die alle Leistungsmodule 4 und alle Anschlusspunkte 3 betreut. Die Leistungssteuereinheit 12 erstellt Regelungsvorgaben für die Leistungsmodule 4. Vorzugsweise verteilt die Leistungssteuereinheit 12 eine Ausgangsleistung am Anschlusspunkt 3 über die Regelungsvorgabe auf die Leistungsmodule 4. Dabei kann vorgesehen sein, dass die Leistungssteuereinheit 12 die Ausgangsleistung am Anschlusspunkt 3 indirekt verteilt und einen Ausgangsstrom pro Sekundärmodul 13 als Führungsgröße für die Sekundärmodule 13 erstellt. Wenn die Sekundärmodule 13 wie erwähnt als Stromquelle arbeiten, setzen sie diese Führungsgröße vorzugsweise über ihre Regelungsmodule 16 direkt um, sofern nicht Sicherheitsmechanismen wie eine Spannungsbegrenzung oder dergleichen dagegensprechen.

Stellgrößen der Regelungsmodule 16 sowohl der Sekundärmodule 13 als auch des Primärmoduls 10 sind hier und vorzugsweise Parameter einer PWM, insbesondere ein Phasenwinkel und ein Duty Cycle einer Phase Shift Steuerung, insbesondere einer Dual Active Bridge, eines DC/DC Wandlers der Stromrichteranordnung 5. Zusätzlich zeigt Fig. 3 noch eine Batterie 17 des Elektrofahrzeugs 2 und ein Batteriemanagementsystem 18 des Elektrofahrzeugs 2, das mit der Schnellladestation 1 kommunizieren kann.

Hier und vorzugsweise erhält die Leistungssteuereinheit 12 vom Elektrofahrzeug 2 einen Soll-Ausgangsstrom, und vorzugsweise eine Soll-Spannung und eine Maximal-Spannung. Die Leistungssteuereinheit 12 verteilt, zumindest in einem Betriebsmodus, den Soll-Ausgangsstrom auf die Leistungsmodule 4. Vorzugsweise ist es dann so, dass die Schnellladestation 1 bis zum Erreichen der Maximal-Spannung insgesamt eine Stromregelung auf den Soll-Strom verfolgt. Die Soll-Spannung kann dabei eher informativ sein und zu Sicherheitszwecken und/oder zum Starten der Regelungen der Regelungsmodule 16 verwendet werden. Vorzugsweise weist die Leistungssteuereinheit 12 dem oder den Sekundärmodulen 13 einen Ausgangsstrom als Führungsgröße zu und teilt dem Primärmodul 10 den Gesamtstrom mit. Letzteres wird im Folgenden näher erläutert.

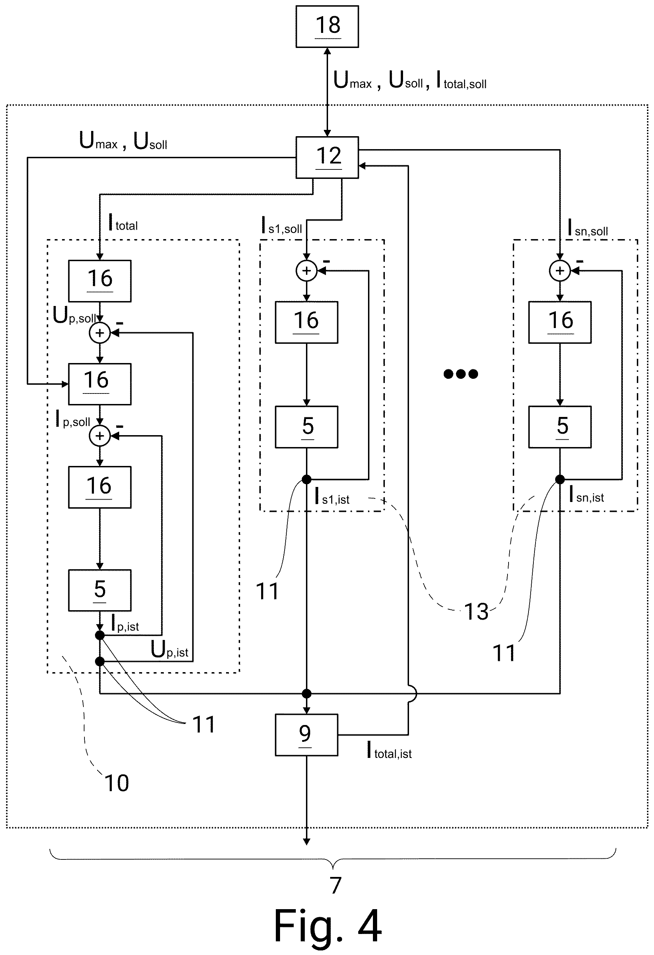

Wie sich aus Fig. 4 ergibt, ist es hier und vorzugsweise so, dass das Primärmodul 10 zusätzlich den Gesamtstrom des Anschlusspunkts 3 regelt. Dafür ist vorzugsweise vorgesehen, dass die Schnellladestation 1 einen Gesamtstromsensor pro Anschlusspunkt 3 aufweist, der mit der Leistungssteuereinheit 12 verbunden ist und dass die Leistungssteuereinheit 12 ein Sensorsignal des Gesamtstromsensors, insbesondere direkt oder als Regelabweichung, an das Primärmodul 10 weitergibt. Wie sich ebenfalls aus Fig. 4 ergibt, ist es dabei vorzugsweise so, dass das Primärmodul 10 aus der Regelung des Gesamtstroms die Führungsgröße für die Regelung der Gesamtspannung als Stellgröße ableitet.

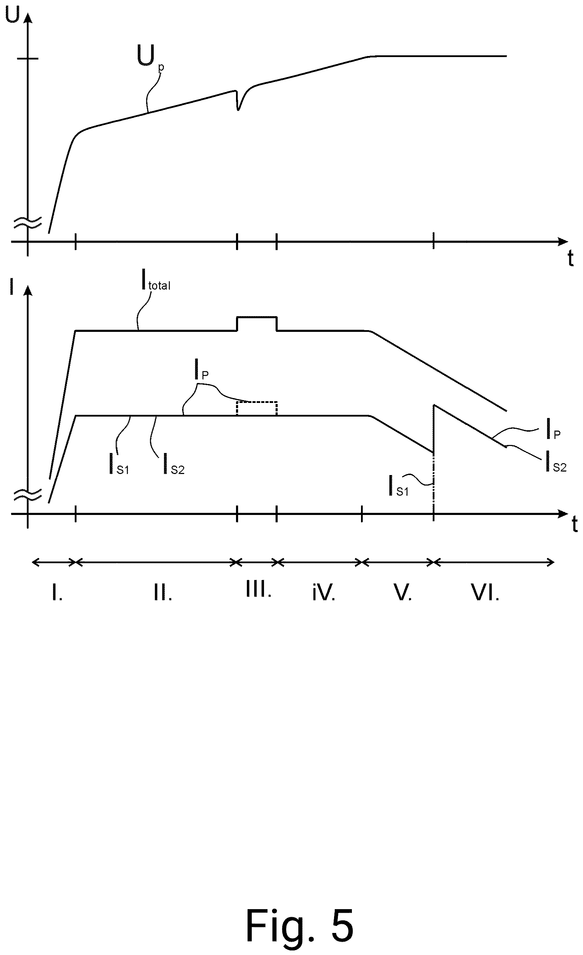

Ein Blick auf Fig. 5 ermöglicht die Erläuterung dieses Regelprinzips. Der Index P an Strom (I) und Spannung (U) steht dabei für das Primärmodul 10 und der Index S für die Sekundärmodule 13, von denen hier beispielhaft zwei vorhanden sind (S1, S2). In einem eingeschwungenen Zustand (Phase II nach einer Startphase I) regeln die Sekundärmodule 13 ihren Strom und das Primärmodul 10 regelt die Gesamtspannung. Das Primärmodul 10 erhält Messwerte des Gesamtstromsensors über die Leistungssteuereinheit 12 und regelt Regelabweichungen des Gesamtstroms aus, indem es die Spannung anpasst. Dass der Weg über die Leistungssteuereinheit 12 erheblich langsamer ist, als die interne Regelung des Leistungsmoduls 4, ist dabei nicht relevant. Langsame Änderungen an der Stromanforderung können so umgesetzt werden. In Fig. 4 ist im Primärmodul 10 nach der Spannungsregelung noch eine Stromregelung gezeigt, die hier und vorzugsweise vorgesehen ist und beispielsweise für die Einhaltung eines Maximalstroms sorgt. Diese ist allerdings optional, ihre Funktion kann auch anders umgesetzt werden.

Benötigt das Elektrofahrzeug 2 nun abrupt mehr Leistung, weil zum Beispiel eine Heizung angeschaltet wird, kann es sein, dass diese Anforderung elektrisch direkt an der Schnellladestation 1 wirksam wird, ohne, dass eine Kommunikation rechtzeitig erfolgt wäre. Eine Regelung über die Leistungssteuereinheit 12 wäre in diesem Fall erheblich verzögert und könnte zum Abbruch des Ladevorgangs führen. Im ersten Moment kann diese Anforderung zu einem Einbrechen der Spannung am Anschlusspunkt 3 führen. Die Spannungsregelung des Primärmoduls 10 regelt diesen Spannungseinbruch dann allerdings sofort aus (Phase III). Zu diesem Zeitpunkt kann die von der Leistungssteuereinheit 12 kommende Stromvorgabe aufgrund der langsameren Reaktion noch auf dem vorherigen Stand sein, sodass die Gesamtstromregelung des Primärmoduls 10 nicht eingreift. Kurzzeitig wird der Gesamtstrom am Anschlusspunkt 3 durch die Spannungsregelung also erhöht. Anschließend oder währenddessen jedoch verzögert reagiert die Leistungssteuereinheit 12, die entweder den Messwert des Gesamtstromsensors weiterleitet, wodurch die Gesamtstromregelung im Primärmodul 10 die Spannungsvorgabe reduziert und der Gesamtstrom wieder auf den ursprünglichen Wert geregelt wird oder die Leistungssteuereinheit 12 erhöht die Gesamtstromvorgabe beispielsweise aufgrund einer Kommunikation mit dem Elektrofahrzeug 2 (Phase IV). Die Gesamtstromregelung könnte grundsätzlich auch in der Leistungssteuereinheit 12 angeordnet sein. Die Sekundärmodule 13 reagieren nicht oder kaum.

Weiter ist hier und vorzugsweise vorgesehen, dass die Leistungssteuereinheit 12 nach einem Effizienzalgorithmus aus den verfügbaren Leistungsmodulen 4 eine Untermenge auswählt und dem Anschlusspunkt 3 zuordnet. Es kann beispielsweise effizienter sein, vier Leistungsmodule 4 bei etwa 50 % ihrer Maximalleistung zu betreiben als zwei Leistungsmodule 4 bei etwa 100 % ihrer Maximalleistung. Fig. 5 zeigt in Phase V ein Abnehmen des Ladestroms und beim Beginn von Phase VI das Abschalten eines Leistungsmoduls 4 und gleichzeitiges Hochregeln der anderen Leistungsmodule 4 (idealisiert). Hier und vorzugsweise ist es nämlich so, dass die Leistungssteuereinheit 12 die Untermenge während des Ladevorgangs nach einem Effizienzalgorithmus anpasst. Weiter ist hier und vorzugsweise vorgesehen, dass die Schnellladestation 1 mindestens einen weiteren Anschlusspunkt 3 aufweist, dass die Ausgangsanschlüsse 6 von mindestens zwei Leistungsmodulen 4 zur Abgabe elektrischer Leistung an dem weiteren Anschlusspunkt 3 der Schnellladestation 1 zu einer zweiten Gruppe parallel geschaltet werden, dass mindestens ein Leistungsmodul 4, vorzugsweise alle Leistungsmodule 4, wahlweise der ersten Gruppe 7 oder der zweiten Gruppe zugeordnet werden kann oder können, und, dass die zweite Gruppe, insbesondere immer genau, ein Primärmodul 10 und mindestens ein Sekundärmodul 13 aufweist.

Weiter ist hier und vorzugsweise vorgesehen, dass das Regelungsmodul 16 des jeweiligen Leistungsmoduls 4 mit dem Leistungsmodul 4 eine Einheit bildet, insbesondere in dem Leistungsmodul 4 angeordnet ist. Denkbar ist, dass das Regelungsmodul 16 ein eigenes Gehäuse aufweist, das mit einem Gehäuse der Leistungselektronik verbunden ist. Bevorzugt weist das Leistungsmodul 4 jedoch ein äußeres Gehäuse auf, in dem das Regelungsmodul 16 und die Leistungselektronik angeordnet sind. So sind die Signalwege besonders kurz. Die Einheit ist als solche einzeln handhabbar.

Vorzugsweise weisen die Leistungsmodule 4 jeweils einen Ausgangsstromsensor und einen Ausgangsspannungssensor als Modulsensoren 11 auf, die mit dem Leistungsmodul 4 eine Einheit bilden. Der Datenfluss zwischen dem Ausgangsstromsensor und/oder dem Ausgangsspannungssensor und dem Regelungsmodul 16 verläuft innerhalb der Einheit, insbesondere innerhalb des Leistungsmoduls 4.

Weiter ist hier und vorzugsweise vorgesehen, dass die Leistungssteuereinheit 12 die Regelungsvorgaben so erstellt, dass das Primärmodul 10 eine höhere zweiseitige Regelreserve aufweist als das oder die Sekundärmodule 13. Hier und vorzugsweise weist das Primärmodul 10 beispielsweise bei Ausnutzung von 60 % bis 80 %, vorzugsweise 40 % bis 80 %, weiter vorzugsweise 20 % bis 90 % der Gesamtleistung der Schnellladestation 1 an einem Anschlusspunkt 3, während der andere nicht belegt ist, eine höhere Regelreserve auf als jedes Sekundärmodul 13. Ist das Primärmodul 10 bereits am Limit seiner Leistung kann es in eine Richtung nicht reagieren. Kann jedes Leistungsmodul 4 bei gegebener Spannung also beispielsweise 60 A stellen und sind von drei Leistungsmodulen 4 gesamt 160 A gefordert, würden die Sekundärmodule 13 beispielsweise je 60 A stellen und das Primärmodul 10 40 A, wodurch dieses noch eine Regelreserve von 20 A nach oben und 40 A nach unten hat.

Vorzugsweise erstellt die Leistungssteuereinheit 12 die Regelungsvorgaben so, dass das Primärmodul 10 bei abrupter Erhöhung oder Absenkung der von dem Elektrofahrzeug 2 elektrisch angeforderten Leistung in beide Richtungen die gleiche Regelreserve plus-minus höchstens 5 %, vorzugsweise höchstens 2 %, aufweist. Die Regelreserve kann den Strom und/oder die Spannung und/oder die Leistung betreffen, hier und vorzugsweise die Leistung oder den Strom.

Weiter ist hier und vorzugsweise vorgesehen, dass die Leistungssteuereinheit 12 über einen Bus, insbesondere CAN-Bus, mit den Leistungsmodulen 4 kommuniziert, vorzugsweise, dass die Regelungsvorgaben und/oder das Sensorsignal des Gesamtstromsensors über den Bus übertragen werden. Insbesondere ein CAN-Bus ist relativ langsam, robust gegenüber elektrischen Störfeldern und günstig und daher vorliegend gut verwendbar.

Auch denkbar ist, dass die Leistungssteuereinheit 12 auf Basis einer Alterungsmetrik der Leistungsmodule 4 aus den verfügbaren Leistungsmodulen 4 eine Untermenge auswählt und dem Anschlusspunkt 3 zuordnet, und/oder, dass die Leistungssteuereinheit 12 auf Basis der Alterungsmetrik der Leistungsmodule 4 die Regelungsvorgaben ermittelt, vorzugsweise derart, dass die Leistungssteuereinheit 12 den Sekundärmodulen 13 unterschiedliche Ausgangsströme als Führungsgrößen zuweist. Ältere Leistungsmodule 4 können so geschont werden, um beispielsweise eine gemeinsame Wartung oder einen gemeinsamen Austausch zu ermöglichen. Die Alterungsmetrik bezieht sich dabei hier und vorzugsweise auf die Betriebsstunden insbesondere relativ zur Last während des Betriebs.

Bevorzugt ist es so, dass die Regelungsmodule 16 der Leistungsmodule 4 derart gleich, insbesondere identisch, sind, dass das Primärmodul 10 aus den einem Anschlusspunkt 3 gewählten Leistungsmodulen 4 frei gewählt werden kann. Es ist also hier und vorzugsweise so, dass kein dediziertes Primärmodul 10 vorgesehen ist, das sich irgendwie von den anderen Leistungsmodulen 4 unterscheidet, sondern dass jedes Leistungsmodul 4 als Primärmodul 10 fungieren kann. Vorzugsweise wird bei einem Ausfall eines Leistungsmoduls 4, das als Primärmodul 10 verwendet wurde, ein anderes Leistungsmodul 4 als Primärmodul 10 verwendet wird. So kann die Schnellladestation 1 auch bei Defekt eines oder mehrerer Leistungsmodule 4 weiter verwendet werden.

Vorgeschlagen wird gemäß einer weiteren Lehre ein Verfahren zur Steuerung einer vorschlagsgemäßen Schnellladestation 1 für Elektrofahrzeuge 2, wobei die Schnellladestation 1 mehrere Leistungsmodule 4 aufweist, wobei die Leistungsmodule 4 jeweils eine Stromrichteranordnung 5 insbesondere zur Wandlung einer Wechselspannung als Eingangsspannung der Schnellladestation 1 in eine Gleichspannung als Ausgangsspannung der Schnellladestation 1 aufweisen, wobei die Leistungsmodule 4 Ausgangsanschlüsse 6 aufweisen, an denen das Leistungsmodul 4 elektrische Leistung mit geregelten Ausgangsparametern abgibt, wobei die Ausgangsanschlüsse 6 von mindestens zwei Leistungsmodulen 4 zur Abgabe elektrischer Leistung an mindestens einem Anschlusspunkt 3 der Schnellladestation 1 zu einer ersten Gruppe 7 zusammen, insbesondere parallel, geschaltet werden.

Wesentlich nach dieser weiteren Lehre ist, dass die Schnellladestation 1 einen Gesamtsensor 9 für den der ersten Gruppe 7 zugeordneten Anschlusspunkt 3 aufweist, der einen Ausgangsparameter des Anschlusspunkts 3 misst und als Sensorsignal ausgibt, dass das Sensorsignal an ein Primärmodul 10 der ersten Gruppe 7 übertragen wird, dass das Primärmodul 10 einen Modulsensor 11 für den gleichen Ausgangsparameter aufweist, der den Ausgangsparameter als Ausgangsparameter des Leistungsmoduls 4 misst, und, dass das Primärmodul 10 das Sensorsignal zur Regelung eines seiner Ausgangsparameter verwendet.

Auf alle Ausführungen zu der vorschlagsgemäßen Schnellladestation 1 darf verwiesen werden.

Vorgeschlagen wird gemäß einer weiteren Lehre ein Leistungsmodul 4 eingerichtet zur Verwendung in einer vorschlagsgemäßen Schnellladestation 1. Auf alle Ausführungen zu der vorschlagsgemäßen Schnellladestation 1 und dem vorschlagsgemäßen Verfahren darf verwiesen werden.

Weiter ist hier und vorzugsweise vorgesehen, dass das Leistungsmodul 4 ein Regelungsmodul 16 aufweist, das so eingerichtet ist, dass das Leistungsmodul 4 als Primärmodul 10 und als Sekundärmodul 13 verwendet werden kann.

### Bezugszeichenliste

- 1: Schnellladestation
- 2: Elektrofahrzeug
- 3: Anschlusspunkt
- 4: Leistungsmodul
- 5: Stromrichteranordnung
- 6: Ausgangsanschluss
- 7: erste Gruppe
- 8: Gleichspannungsschiene
- 9: Gesamtsensor
- 10: Primärmodul
- 11: Modulsensor
- 12: Leistungssteuereinheit
- 13: Sekundärmodul
- 14: Energiezähler
- 15: Zählerstromsensor
- 16: Regelungsmodul
- 17: Batterie
- 18: Batteriemanagementsystem

## Patentansprüche

1. Schnellladestation für Elektrofahrzeuge (2), wobei die Schnellladestation (1) mehrere Leistungsmodule (4) aufweist, wobei die Leistungsmodule (4) jeweils eine Stromrichteranordnung (5) insbesondere zur Wandlung einer Wechselspannung als Eingangsspannung der Schnellladestation (1) in eine Gleichspannung als Ausgangsspannung der Schnellladestation (1) aufweisen, wobei die Leistungsmodule (4) Ausgangsanschlüsse (6) aufweisen, an denen das Leistungsmodul (4) elektrische Leistung mit geregelten Ausgangsparametern abgibt, wobei die Ausgangsanschlüsse (6) von mindestens zwei Leistungsmodulen (4) zur Abgabe elektrischer Leistung an mindestens einem Anschlusspunkt (3) der Schnellladestation (1) zu einer ersten Gruppe (7) zusammen, insbesondere parallel, geschaltet werden,
**dadurch gekennzeichnet,**
**dass** die Schnellladestation (1) einen Gesamtsensor (9) für den der ersten Gruppe (7) zugeordneten Anschlusspunkt (3) aufweist, der einen Ausgangsparameter des Anschlusspunkts (3) misst und als Sensorsignal ausgibt, dass das Sensorsignal an ein Primärmodul (10) der ersten Gruppe (7) übertragen wird, dass das Primärmodul (10) einen Modulsensor (11) für den gleichen Ausgangsparameter aufweist, der den Ausgangsparameter als Ausgangsparameter des Leistungsmoduls (4) misst, und, dass das Primärmodul (10) das Sensorsignal zur Regelung eines seiner Ausgangsparameter verwendet.

2. Schnellladestation nach Anspruch 1, **dadurch gekennzeichnet, dass** der Gesamtsensor (9) ein Gesamtstromsensor und der Modulsensor (11) ein Modulstromsensor ist, und/oder, dass der Gesamtsensor (9) eine maximale Abweichung bei der Messung des Ausgangsparameters im Betriebsbereich der Schnellladestation (1) aufweist, die höchstens 50 %, vorzugsweise höchstens 30 %, weiter vorzugsweise höchstens 10 %, der maximalen Abweichung im Betriebsbereich des Leistungsmoduls (4) des Modulsensors (11) beträgt.

3. Schnellladestation nach Anspruch 1 oder 2, **dadurch gekennzeichnet, dass** die Schnellladestation (1) eine Leistungssteuereinheit (12) aufweist, dass die Leistungssteuereinheit (12) Regelungsvorgaben für die Leistungsmodule (4) erstellt, vorzugsweise, dass der Gesamtstromsensor mit der Leistungssteuereinheit (12) verbunden ist, dass die Leistungssteuereinheit (12) das Sensorsignal des Gesamtstromsensors, insbesondere direkt oder als Regelabweichung, an das Primärmodul (10) weitergibt.

4. Schnellladestation nach einem der vorhergehenden Ansprüche, **dadurch gekennzeichnet, dass** das Primärmodul (10) zwischen verschiedenen Leistungsmodulen (4) wechselt.

5. Schnellladestation nach einem der vorhergehenden Ansprüche, **dadurch gekennzeichnet, dass** die Schnellladestation (1) einen, insbesondere geeichten, Energiezähler (14) aufweist, der einen Zählerstromsensor (15) aufweist, vorzugsweise, dass die Leistungssteuereinheit (12) ein Sensorsignal des Zählerstromsensors (15) mit dem Sensorsignal des Gesamtstromsensors vergleicht, insbesondere um eine Funktionstüchtigkeit des Zählerstromsensors (15) und/oder des Gesamtstromsensors zu ermitteln und/oder den Gesamtsensor (9) zu kalibrieren, oder, dass der Gesamtstromsensor der Zählerstromsensor (15) ist.

6. Schnellladestation nach einem der vorhergehenden Ansprüche, **dadurch gekennzeichnet, dass** die erste Gruppe (7), insbesondere immer genau, ein Primärmodul (10) und mindestens ein Sekundärmodul (13) aufweist, dass die Leistungsmodule (4) jeweils ein Regelungsmodul (16) aufweisen, das die Stromrichteranordnung (5) des jeweiligen Leistungsmoduls (4) regelt, dass das Regelungsmodul (16) des Primärmoduls (10) eine Gesamtregelung für den Anschlusspunkt (3) übernimmt, dass das Regelungsmodul (16) oder die Regelungsmodule (16) des Sekundärmoduls (13) oder der Sekundärmodule (13) mindestens einen ihrer Ausgangsparameter regeln.

7. Schnellladestation nach einem der vorhergehenden Ansprüche, **dadurch gekennzeichnet, dass** das Primärmodul (10) die Gesamtspannung des Anschlusspunkts (3) regelt, insbesondere indem es seine Ausgangsspannung regelt, und so als Spannungsquelle funktioniert, und/oder,
dass das Sekundärmodul (13) seinen Ausgangsstrom regelt und so als Stromquelle funktioniert, oder, dass die Sekundärmodule (13) ihren Ausgangsstrom regeln und so als Stromquellen funktionieren.

8. Schnellladestation nach Anspruch 6 oder 7, **dadurch gekennzeichnet, dass** das Regelungsmodul (16) des jeweiligen Leistungsmoduls (4) mit dem Leistungsmodul (4) eine Einheit bildet, insbesondere in dem Leistungsmodul (4) angeordnet ist, vorzugsweise, dass die Leistungsmodule (4) jeweils einen Ausgangsstromsensor und einen Ausgangsspannungssensor als Modulsensoren (11) aufweisen, die mit dem Leistungsmodul (4) eine Einheit bilden, und der Datenfluss zwischen dem Ausgangsstromsensor und/oder dem Ausgangsspannungssensor und dem Regelungsmodul (16) innerhalb der Einheit, insbesondere innerhalb des Leistungsmoduls (4), verläuft.

9. Schnellladestation nach einem der Ansprüche 3 bis 8, **dadurch gekennzeichnet, dass** die Leistungssteuereinheit (12) die Regelungsvorgaben so erstellt, dass das Primärmodul (10) eine höhere zweiseitige Regelreserve aufweist als das oder die Sekundärmodule (13), vorzugsweise, dass die Leistungssteuereinheit (12) die Regelungsvorgaben so erstellt, dass das Primärmodul (10) bei abrupter Erhöhung oder Absenkung der von dem Elektrofahrzeug (2) elektrisch angeforderten Leistung in beide Richtungen die gleiche Regelreserve plus-minus höchstens 5 %, vorzugsweise höchstens 2 %, aufweist.

10. Schnellladestation nach einem der Ansprüche 3 bis 9, **dadurch gekennzeichnet, dass** die Leistungssteuereinheit (12) über einen Bus, insbesondere CAN-Bus, mit den Leistungsmodulen (4) kommuniziert, vorzugsweise, dass die Regelungsvorgaben und/oder das Sensorsignal des Gesamtstromsensors über den Bus übertragen werden.

11. Schnellladestation nach einem der Ansprüche 3 bis 10, **dadurch gekennzeichnet, dass** die Leistungssteuereinheit (12) auf Basis einer Alterungsmetrik der Leistungsmodule (4) aus den verfügbaren Leistungsmodulen (4) eine Untermenge auswählt und dem Anschlusspunkt (3) zuordnet, und/oder, dass die Leistungssteuereinheit (12) auf Basis der Alterungsmetrik der Leistungsmodule (4) die Regelungsvorgaben ermittelt, vorzugsweise derart, dass die Leistungssteuereinheit (12) den Sekundärmodulen (13) unterschiedliche Ausgangsströme als Führungsgrößen zuweist.

12. Schnellladestation nach einem der vorhergehenden Ansprüche, **dadurch gekennzeichnet, dass** die Regelungsmodule (16) der Leistungsmodule (4) derart gleich, insbesondere identisch, sind, dass das Primärmodul (10) aus den einem Anschlusspunkt (3) gewählten Leistungsmodulen (4) frei gewählt werden kann, vorzugsweise, dass bei einem Ausfall eines Leistungsmoduls (4), das als Primärmodul (10) verwendet wurde, ein anderes Leistungsmodul (4) als Primärmodul (10) verwendet wird.

13. Verfahren zur Steuerung einer Schnellladestation (1) für Elektrofahrzeuge (2) nach einem der vorhergehenden Ansprüche, wobei die Schnellladestation (1) mehrere Leistungsmodule (4) aufweist, wobei die Leistungsmodule (4) jeweils eine Stromrichteranordnung (5) insbesondere zur Wandlung einer Wechselspannung als Eingangsspannung der Schnellladestation (1) in eine Gleichspannung als Ausgangsspannung der Schnellladestation (1) aufweisen, wobei die Leistungsmodule (4) Ausgangsanschlüsse (6) aufweisen, an denen das Leistungsmodul (4) elektrische Leistung mit geregelten Ausgangsparametern abgibt, wobei die Ausgangsanschlüsse (6) von mindestens zwei Leistungsmodulen (4) zur Abgabe elektrischer Leistung an mindestens einem Anschlusspunkt (3) der Schnellladestation (1) zu einer ersten Gruppe (7) parallel geschaltet werden,
**dadurch gekennzeichnet,**
**dass** die Schnellladestation (1) einen Gesamtsensor (9) für den der ersten Gruppe (7) zugeordneten Anschlusspunkt (3) aufweist, der einen Ausgangsparameter des Anschlusspunkts (3) misst und als Sensorsignal ausgibt, dass das Sensorsignal an ein Primärmodul (10) der ersten Gruppe (7) übertragen wird, dass das Primärmodul (10) einen Modulsensor (11) für den gleichen Ausgangsparameter aufweist, der den Ausgangsparameter als Ausgangsparameter des Leistungsmoduls (4) misst, und, dass das Primärmodul (10) das Sensorsignal zur Regelung eines seiner Ausgangsparameter verwendet.

14. Leistungsmodul eingerichtet zur Verwendung in einer Schnellladestation (1) nach einem der Ansprüche 1 bis 12.

15. Leistungsmodul nach Anspruch 14, **dadurch gekennzeichnet, dass** das Leistungsmodul (4) ein Regelungsmodul (16) aufweist, das so eingerichtet ist, dass das Leistungsmodul (4) als Primärmodul (10) und als Sekundärmodul (13) verwendet werden kann.
